# EUROPÄISCHE PATENTANMELDUNG

(11) **EP 3 037 769 A1**
(43) Veröffentlichungstag der Anmeldung: **29.06.2016**
(21) Anmeldenummer: 15199754.1
(22) Anmeldetag: 14.12.2015
(51) Int. Cl.: F28D 21/00, B02C 17/18

(54) **VERFAHREN ZUR WÄRMERÜCKGEWINNUNG SOWIE EINE VORRICHTUNG ZUR WÄRMERÜCKGEWINNUNG**

(30) Priorität: 22.12.2014 DE 102014119345
(71) Anmelder: Cemex Research Group AG, 2555 Brügg bei Biel (CH)
(72) Erfinder: Peters, Jan Kristof, 33154 Salzkotten (DE); Ayala, Carlos Medina, 2504 Biel/Bienne (CH)
(74) Vertreter: Berkenbrink, Kai-Oliver

(57) **Zusammenfassung**

Die Erfindung betrifft ein Verfahren zur Wärmerückgewinnung sowie eine Vorrichtung zur Wärmerückgewinnung.

## Beschreibung

Die Erfindung betrifft ein Verfahren zur Wärmerückgewinnung sowie eine Vorrichtung zur Wärmerückgewinnung.

Zur Ressourcenschonung sowie aus finanziellen Gründen ist häufig eine Wärmerückgewinnung gewünscht. Insbesondere kann eine Wärmerückgewinnung von Prozesswärme, insbesondere industrieller Prozesswärme gewünscht sein, da diese bei zahlreichen industriellen Anlagen regelmäßig in hohem Maße anfällt. Beispielsweise wird regelmäßig die in industriellen Öfen anfallende Abwärme für Heizzwecke rückgewonnen, beispielsweise zum Vorheizen von zu erwärmendem Ofengut.

Allerdings verbleibt ein wesentlicher Anteil industrieller Prozesswärme weiterhin ungenutzt.

Insbesondere aus Gründen der Ressourcenschonung ist es heutzutage jedoch in besonderem Maße gewünscht, diese Wärmequellen in verstärktem Umfang zu nutzen.

Vor diesem Hintergrund liegt der Erfindung die Aufgabe zugrunde, ein Verfahren sowie eine Vorrichtung zur Verfügung zu stellen, durch welche Prozesswärme, insbesondere industrielle Prozesswärme, rückgewonnen werden kann. Insbesondere liegt der Erfindung insoweit die Aufgabe zugrunde, ein Verfahren sowie eine Vorrichtung zur Verfügung zu stellen, durch die bisher ungenutzte industrielle Prozesswärme, insbesondere zur Ressourcenschonung rückgewonnen werden kann.

Zur Lösung dieser Aufgabe wird erfindungsgemäß zur Verfügung gestellt ein Verfahren zur Rückgewinnung der beim Mahlen in einer Kugelmühle entstehenden Mahlwärme, umfassend die folgenden Schritte:
- Ausleiten der beim Mahlen in einer Kugelmühle entstehenden Mühlenabluft aus der Kugelmühle;
- Zuleiten der aus der Kugelmühle ausgeleiteten Mühlenabluft in einen Wärmetauscher;
- Durchleiten der dem Wärmetauscher zugeleiteten Mühlenabluft durch den Wärmetauscher;
- Ausleiten der Mühlenabluft aus dem Wärmetauscher;
- Zuleiten von Wasser in den Wärmetauscher;
- Durchleiten von Wasser durch den Wärmetauscher derart, dass Wärme von der durch den Wärmetauscher geleiteten Mühlenabluft auf das Wasser übertragen wird;
- Ausleiten des durch den Wärmetauscher geleiteten Wassers aus dem Wärmetauscher.

Die Erfindung beruht auf der überraschenden Erkenntnis, dass die beim Mahlen in einer Kugelmühle entstehende Mahlwärme hervorragend dadurch rückgewonnen werden kann, dass diese Mahlwärme zum Erhitzen von Wasser verwendet werden kann. Ein solches Aufwärmen von Wasser mittels der in einer Kugelmühle entstehenden Mahlwärme geht mit einer besonderen Ressourcenschonung einher, da das Wasser nicht mit Primärenergie erwärmt werden muss.

Als vorteilhaft hat sich dabei auch die erfindungsgemäße Erkenntnis herausgestellt, dass die aufgrund der Mahlwärme in einer Kugelmühle entstehende Mühlenabluft eine Temperatur aufweist, die sich im besonderen Maße zum Erwärmen von Wasser eignet. Insbesondere weist diese Mühlenabluft in der Regel eine Temperatur auf, die unmittelbar zum Erwärmen von Wasser verwendet werden kann, ohne die Mühlenabluft zuvor noch abkühlen oder erhitzen zu müssen. Dies steht im Gegensatz zur Nutzung von Prozessabwärme aus zahlreichen anderen industriellen Anlagen, die für eine unmittelbare Erwärmung von Wasser häufig zu hoch ist, so dass diese zuvor noch abgekühlt werden muss, um anschließend Wasser zu erwärmen. Ferner hat es sich als vorteilhaft herausgestellt, dass die Mühlenabluft aus Kugelmühlen im wesentlichen keine aggressiven Bestandteile aufweist, so dass die Prozesstechnik zum Erwärmen von Wasser durch Kugelmühlenabluft besonders einfach gestaltbar ist.

Bekanntermaßen handelt es sich bei einer Kugelmühle um ein Mahlaggregat zur Mahlung von Mahlgut. Dabei weist eine Kugelmühle einen in der Regel im wesentlichen zylindrischen oder rohrförmigen Mahlraum auf, der mit kugelförmigen oder zylindrischen Mahlkörpern gefüllt ist. Zur Mahlung wird der Mahlraum in Rotation versetzt, so dass die Mahlkörper Stoß- und Reibbewegungen gegeneinander sowie gegen die Wand des Mahlraums ausüben. Durch diese Reib- und Stoßbewegungen wird im Mahlraum befindliches Mahlgut zerkleinert. Gleichzeitig entsteht durch diese Reib- und Stoßbewegungen eine erhebliche Mahlwärme, so dass die Gasatmosphäre im Mahlraum - im wesentlichen Luft - durch diese Mahlwärme aufgewärmt wird und eine warme bis heiße Mühlenabluft bildet. Erfindungsgemäß wird nunmehr diese in einer Kugelmühle entstehende Mühlenabluft im Rahmen des erfindungsgemäßen Verfahrens zum Erwärmen von Wasser verwendet.

Als besonders geeignet hat sich das erfindungsgemäße Verfahren herausgestellt, sofern Mühlenabluft einer Kugelmühle in Form einer zum Mahlen von Zementklinker verwendeten Kugelmühle verwendet wird. Bekanntermaßen wird Zementklinker regelmäßig in Kugelmühlen zu Zement zermahlen. Dabei fällt regelmäßig Mühlenabluft in erheblichen Mengen an, die sich aufgrund ihrer Temperatur und Zusammensetzung als hervorragendes Medium zum Erwärmen von Wasser durch das erfindungsgemäße Verfahren erwiesen hat.

Als besonders vorteilhaft hat es sich herausgestellt, wenn die Mühlenabluft dem Wärmetauscher mit einer Temperatur im Bereich von 80 bis 140°C zugeleitet wird. Mühlenabluft mit einer Temperatur in diesem Temperaturintervall weist zum einen eine Wärme auf, aufgrund derer Wasser durch das erfindungsgemäße Verfahren effektiv erwärmbar ist. Gleichzeitig kann durch die Begrenzung der Temperatur der Mühlenabluft auf 140°C vermieden werden, dass es im Wärmetauscher zu einem Sieden des erwärmten Wassers kommt, so dass das erfindungsgemäße Verfahren im wesentlichen drucklos durchgeführt werden kann. Um die Wärmeübertragung von der Mühlenabluft auf das Wasser noch effizienter durchführen zu können, kann vorgesehen sein, die Mühelabluft dem Wärmetauscher mit einer Temperatur von wenigstens 85, 90, 95, 100, 105 oder 110°C zuzuleiten. Ferner kann vorgesehen sein, dass die Mühlenabluft dem Wärmetauscher mit einer Temperatur von höchstens 135, 130, 125 oder 120°C zugeleitet wird, um ein Sieden des zu erwärmenden Wassers im Wärmetauscher mit Sicherheit verhindern zu können. Da Mühlenabluft aus Kügelmühlen zum Mahlen von Zementklinker regelmäßig eine Temperatur im Bereich von 80 bis 140°C aufweist, ist die Verwendung einer solchen Mühlenabluft für das erfindungsgemäße Verfahren besonders vorteilhaft.

Als effektiv für die Erwärmung von Wasser durch das erfindungsgemäße Verfahren hat es sich erwiesen, wenn dem Wärmetauscher Mühlenabluft mit einem Volumen von wenigstens 500 m³/min (Kubikmeter pro Minute) zugeleitet wird, also beispielsweise auch mit einem Volumen von wenigstens 600, 700, 800, 900 oder 1.000 m³/min. Ferner kann vorteilhafterweise vorgesehen sein, das Volumen der dem Wärmetauscher zugeleiteten Mühlenabluft auf höchstens 3.000 m³/min zu beschränken, da Wärmetauscher, insbesondere Lamellenwärmetauscher in der Regel für entsprechende Volumenströme ausgelegt sind und das erfindungsgemäße Verfahren daher ohne weiteres mit Wärmetauschern gemäß dem Stand der Technik durchführbar ist. Die Durchführung des Verfahrens mit den vorbezeichneten Volumenströmen ist insbesondere auch dann vorteilhaft, soweit die Mühlenabluft die vorbezeichneten Temperaturen aufweist.

Erfindungsgemäß kann insbesondere vorgesehen sein, dass die Mühlenabluft während des Durchleitens durch den Wärmetauscher auf eine Temperatur von nicht unter 40°C abgekühlt wird. Erfindungsgemäß wurde festgestellt, dass hierdurch eine Kondensatbildung von gasförmigen Bestandteilen der Mühlenabluft im Wärmetauscher verhindert werden kann. Um eine Kondensatbildung im Wärmetauscher mit noch größerer Sicherheit ausschließen zu können, kann vorgesehen sein, dass die Mühlenabluft während des Durchleitens durch den Wärmetausche auf eine Temperatur nicht unter 45 oder nicht unter 50°C abgekühlt wird.

Bevorzugt kann vorgesehen sein, dass die Mühlenabluft mit einer Temperatur nicht unter 60°C aus dem Wärmetauscher ausgeleitet wird. Hierdurch kann eine Kondensatbildung von gasförmigen Bestandteilen der Mühlenabluft im Kamin, der dem Wärmetauscher nachgeschaltet sein kann, vermieden werden. Insofern kann beispielsweise auch vorgesehen sein, die Mühlenabluft mit einer Temperatur nicht unter 65, 70 oder 75°C aus dem Wärmetauscher auszuleiten.

Es kann weiter vorgesehen sein, dass die aus der Kugelmühle ausgeleitete Mühlenabluft gereinigt wird, insbesondere bevor sie dem Wärmetauscher zugeleitet wird. Eine solche Reinigung kann insbesondere durch ein Filtern der Mühlenabluft geschehen, also indem die Mühlenabluft durch einen Filter oder ein Filtersystem geleitet wird. Durch eine solche Reinigung der Mühlenabluft kann verhindert werden, dass sich feste Bestandteile der Mühlenabluft, insbesondere Stäube, im Wärmetauscher absetzen und dessen Funktionalität hierdurch negativ beeinträchtigen können.

Grundsätzlich kann für die Durchführung des erfindungsgemäßen Verfahrens ein beliebiger Wärmetauscher nach dem Stand der Technik vorgesehen sein, durch welchen Wärme indirekt von einem gasförmigen Medium (hier: Mühlenabluft) auf ein flüssiges Medium (hier: Wasser) mittels indirekter Wärmeübertragung übertragbar ist. Dabei können die Ströme dieser Medien im Wärmetauscher im Gleichstrom, im Gegenstrom oder im Kreuzstrom geführt werden. Besonders bevorzugt ist für die Durchführung des erfindungsgemäßen Verfahrens ein Wärmetauscher in Form eines Lamellenwärmetauschers vorgesehen. Erfindungsgemäß wurde festgestellt, dass ein Wärmeübertrag von der Mühlenabluft auf kaltes Wasser besonders effektiv in einem solchen Lamellenwärmetauscher durchführbar ist.

Das im Wärmetauscher durch die warme Mühlenabluft zu wärmende Wasser wird dem Wärmetauscher bevorzugt mit einer Temperatur im Bereich von über 0 bis 30°C zugeleitet. Erfindungsgemäß wurde festgestellt, dass ein Wärmeübertrag von der Mühlenabluft auf Wasser besonders effektiv geschieht, wenn das Wasser möglichst kalt ist und insbesondere eine Temperatur von nicht über 30°C, also beispielsweise auch von nicht über 25 oder nicht über 20°C aufweist. Bevorzugt ist vorgesehen, dass das Wasser während des Durchleitens durch den Wärmetauscher durch die von der Mühlenabluft auf das Wasser übertragene Wärme auf eine Temperatur im Bereich von 50 bis unter 100°C aufgeheizt wird. Erfindungsgemäß wurde festgestellt, dass die Effizienz der Wärmeübertragung von der Mühlenabluft auf das Wasser im Wärmetauscher abnimmt, wenn die Temperatur des Wassers über 50°C steigt. Ferner ist bevorzugt vorgesehen, dass der Wärmeübergang von der Mühlenabluft auf das Wasser im Wärmetauscher im wesentlichen drucklos erfolgt, weshalb dass das zu erwärmende Wasser nicht über seine Siedetemperatur erhitzt werden sollte. Insofern kann beispielsweise auch vorgesehen sein, dass das Wasser während des Durchleitens durch den Wärmetauscher auf eine Temperatur im Bereich von wenigstens 70, 75, 80 oder 85°C und beispielsweise auch höchstens auf eine Temperatur von 95 oder 90°C aufgewärmt wird.

Das erfindungsgemäße Verfahren kann insbesondere derart durchgeführt werden und der erfindungsgemäße Wärmetauscher derart ausgebildet sein, dass durch den Wärmetauscher Wärme von der Mühlenabluft auf das zu erwärmende Wasser mit einer Leistung von wenigstens 100 kW (Kilowatt) übertragen wird, also beispielsweise auch mit einer Leistung von wenigstens 150, 200, 250, 300, 350 oder 400 kW. Hierdurch kann eine besonders effektive Übertragung von Wärme auf das Wasser erreicht werden. Ferner kann vorgesehen sein, die Wärme von der Mühlenabluft auf das zu erwärmende Wasser durch den Wärmetauscher mit einer Energie von höchstens 1.000 kW zu übertragen, also beispielsweise auch mit Energie von höchstens 900, 800, 700, 600, 500 oder 400 kW, da Wärmetauscher, insbesondere Lamellenwärmetauscher in der Regel für entsprechende Leistungen ausgelegt sind und das erfindungsgemäße Verfahren daher ohne weiteres mit Wärmetauschern gemäß dem Stand der Technik durchführbar ist. Da die spezifische Wärmekapazität von Wasser etwa 4.18 kJ/kg K beträgt, lassen sich durch das erfindungsgemäße Verfahren daher bei einer wie vorstehend angegebenen Leistung von beispielsweise 200 kW beispielsweise 20 m³ (Kubikmeter) Wasser in etwa 4 h 4 min von 15°C auf 85°C erwärmen.

Nach Ausleiten der Mühlenabluft aus dem Wärmetauscher kann diese in einen Kamin eingeleitet werden, durch welchen die Mühlenabluft als Abgas in die Atmosphäre abgegeben werden kann.

Durch das erfindungsgemäße Verfahren erhält man damit aus kaltem Wasser Warm- oder Heißwasser, ohne für dessen Erwärmung zusätzliche Energie, insbesondere Primärenergie aufbringen zu müssen. Vielmehr wird im Rahmen des erfindungsgemäßen Verfahrens eine bisher nicht erschlossene Energiequelle, nämlich warme Mühlenabluft aus einer Kugelmühle, genutzt, die bisher im wesentlichen ungenutzt aus einer Kugelmühle ausgeleitet und in die Atmosphäre geleitet wurde.

Das durch das Aufwärmen im Wärmetauscher entstehende Warm- oder Heißwasser kann anschließend für beliebige Zwecke verwendet werden, für die Warm- oder Heißwasser verwendet werden kann, beispielsweise für sanitäre oder sonstige Reinigungszwecke, als Heizwasser für eine Heizanlage oder zur Verwendung als warmes Schwimmwasser in einem Schwimmbad.

Das durch das erfindungsgemäße Verfahren aufzuwärmende Wasser kann beispielsweise Leitungswasser sein, das beispielsweise aus einem Wasserleitungsnetz dem Wärmetauscher zugeleitet werden kann, insbesondere beispielsweise auch kontinuierlich. Alternativ kann vorgesehen sein, dass das aufzuwärmende Wasser beispielsweise aus einem Tankwagen zugeleitet wird, wobei beispielsweise zunächst kaltes Wasser aus dem Tank des Tankwagens in den Wärmetauscher eingeleitet und anschließend das dort erwärmte Wasser wieder in den Tank des Tankwagens zurückgeleitet werden kann.

Gegenstand der Erfindung ist ferner eine Vorrichtung, auf der insbesondere das erfindungsgemäße Verfahren durchführbar sein kann, mit folgenden Merkmalen:
- Abluftzuleitungsmittel, durch die aus einer Kugelmühle ausgeleitete Mühlenabluft einem Wärmetauscher zuleitbar ist;
- einem Wärmetauscher, durch den die über die Abluftzuleitungsmittel zuleitbare Mühlenabluft leitbar ist;
- Abluftausleitungsmittel, durch die die Mühlenabluft aus dem Wärmetauscher ausleitbar ist;
- Wasserzuleitungsmittel, durch die Wasser dem Wärmetauscher zuleitbar ist;
- der Wärmetauscher ist derart ausgebildet, dass über die Wasserzuleitungsmittel dem Wärmetauscher zugeleitetes Wasser derart durch den Wärmetauscher leitbar ist, dass Wärme von der durch den Wärmetauscher geleiteten Mühlenabluft auf das Wasser übertragbar ist;
- Wasserausleitungsmittel, durch die durch den Wärmetauscher geleitetes Wassers aus dem Wärmetauscher ausleitbar ist.

Die Abluftzuleitungsmittel sowie die Abluftausleitungsmittel können die aus dem Stand der Technik bekannten Mittel zum Leiten von Mühlenabluft sein, wie beispielsweise Rohre, Kamine und dergleichen Leitungsmittel. Ferner kann es sich bei den Wasserzuleitungsmitteln und Wasserausleitungsmitteln um die aus dem Stand der Technik bekannten Mittel zum Leiten von Wasser handeln, wie beispielsweise Rohre, Schläuche und dergleichen Leitungsmittel. Bei dem Wärmetauscher kann es sich, wie zuvor ausgeführt, bevorzugt um einen Lamellenwärmetauscher handeln.

Im Übrigen können die Komponenten der erfindungsgemäßen Vorrichtung derart ausgebildet sein, dass diese für die Durchführung des erfindungsgemäßen Verfahrens ausgebildet beziehungsweise geeignet sind. Insoweit kann auf die hierfür aus dem Stand der Technik bekannten Komponenten zurückgegriffen werden.

Weitere Merkmale der Erfindung ergeben sich aus den Unteransprüchen, der Figur sowie der zugehörigen Figurenbeschreibung.

Sämtliche Merkmale der Erfindung können, einzeln oder in Kombination, beliebig miteinander kombiniert sein.

Ein Ausführungsbeispiel der Erfindung wird anhand der nachfolgenden Figurenbeschreibung näher erläutert.

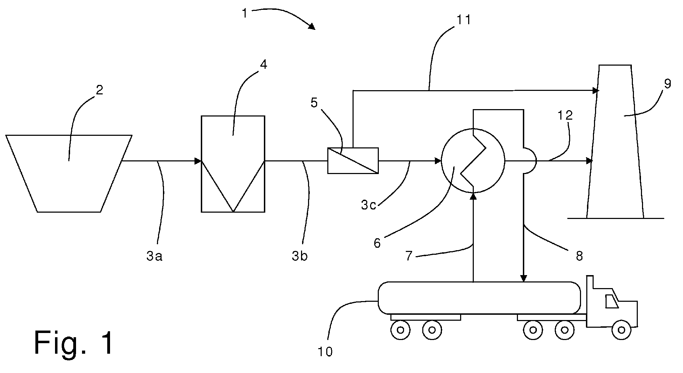

Dabei zeigt Figur 1 ein Fließbild des erfindungsgemäßen Verfahrens.

In dem Fließbild gemäß Figur 1 ist eine insgesamt mit dem Bezugszeichen 1 gekennzeichnete Vorrichtung zur Rückgewinnung der beim Mahlen in einer Kugelmühle entstehenden Mahlwärme dargestellt, durch welche das erfindungsgemäße Verfahren durchführbar ist.

In Figur 1 ist mit dem Bezugszeichen 2 eine Kugelmühle, mit dem Bezugszeichen 6 ein Lamellenwärmetauscher sowie mit dem Bezugszeichen 9 ein Kamin dargestellt. Die Kugelmühle 2 ist über Abluftzuleitungsmittel 3a, 3b, 3c in Form von Rohren derart strömungstechnisch mit dem Lamellenwärmetauscher 6 verbunden, dass durch diese Abluftzuleitungsmittel 3a, 3b, 3c aus der Kugelmühle 2 ausgeleitete Mühlenabluft dem Lamellenwärmetauscher 6 zuleitbar ist. Dabei ist die Kugelmühle 2 zunächst über einen ersten Leitungsabschnitt 3a der Abluftzuleitungsmittel mit einem strömungstechnisch der Kugelmühle 2 nachgeschalteten Filter 4 verbunden. Ein dem Filter 4 strömungstechnisch nachgeschalteter Leitungsabschnitt 3b der Abluftzuleitungsmittel führt zunächst zu einem Stellmittel 5 und von diesem ein dritter weiterer Leitungsabschnitt 3c der Abluftzuleitungsmittel zu dem, dem Stellmittel 5 strömungstechnisch nachgeschalteten Lamellenwärmetauscher 6.

Vom Lamellenwärmetauscher 6 führt ein Abluftausleitungsmittel 12 in Form eines Rohres zu einem dem Lamellenwärmetauscher 6 strömungstechnisch nachgeschalteten Kamin 9.

Vom Stellmittel 5 führt ein Abluftleitungsmittel 11 in Form eines Rohres unmittelbar zum Kamin 9.

Ferner sind in Figur 1 dargestellt Wasserzuleitungsmittel 7 und Wasserausleitungsmittel 8 in Form von Rohren sowie ein Tankfahrzeug 10.

Durch die Wasserzuleitungsmittel 7 ist kaltes Wasser vom Tankfahrzeug 10 dem Lammellenwärmetauscher 6 zuleitbar und über die Wasserausleitungsmittel 8 durch den Lamellenwärmetauscher 6 geleitetes Wasser aus dem Lamellenwärmetauscher 6 ausleitbar und in das Tankfahrzeug 10 zurückleitbar.

Der Filter 4 ist derart ausgebildet, dass durch diesen staubförmige Partikel aus der Mühlenabluft der Kugelmühle 2 filterbar sind.

Das Stellmittel 5 ist derart ausgebildet, dass durch dieses durch den Leitungsabschnitt 3b der Abluftzuleitungsmittel zugeleitete Mühlenabluft wahlweise dem Leitungsabschnitt 3c der Abluftzuleitungsmittel oder dem Abluftleitungsmittel 11 zuleitbar ist.

Der Lamellenwärmetauscher 6 ist derart ausgebildet, dass durch diesen Wärme von der durch den Lamellenwärmetauscher 6 geleiteten Mühlenabluft auf das durch den Lamellenwärmetauscher 6 geleitete Wasser übertragbar ist.

Zur Durchführung des erfindungsgemäßen Verfahrens wird beim Mahlen in der Kugelmühle 2 entstehende Mühlenabluft aus der Kugelmühle 2 zunächst über den Leitungsabschnitt 3a der Abluftzuleitungsmittel dem Filter 4 und anschließend über die Leitungsabschnitte 3b, 3c der Abluftzuleitungsmittel dem Lamellenwärmetauscher 6 zugeleitet. Ferner wird dem Lamellenwärmetauscher 6 gleichzeitig über den Leitungsabschnitt 7 der Wasserzuleitungsmittel vom Tankwagen 10 Wasser zugeleitet. In dem Lamellenwärmetauscher 6 wird nunmehr Wärme von der Mühlenabluft auf das Wasser übertragen.

Nach Durchleiten der Mühlenabluft durch den Lamellenwärmetauscher 6 wird diese durch die Abluftausleitungsmittel 12 aus dem Lamellenwärmetauscher 6 abgezogen und dem Kamin 9 zugeführt.

Ferner wird das im Lamellenwärmetauscher 6 erwärmte Wasser über die Wasserausleitungsmittel 8 aus dem Lamellenwärmetauscher 6 ausgeleitet und in den Tankwagen 10 zurückgeführt.

Im Ausführungsbeispiel wird Mühlenabluft mit einer Temperatur von etwa 110 °C dem Lamellenwärmetauscher 6 zugeleitet und mit einer Temperatur von etwa 80 °C aus dem Lamellenwärmetauscher 6 abgezogen und dem Kamin 9 zugeleitet. Der Volumenstrom der dem Lamellenwärmetauscher 6 zugeleiteten Mühlenabluft beträgt etwa 1.400 m³/min.

Die Leistung des Lamellenwärmetauschers 6 beträgt etwa 250 kW.

Das dem Lamellenwärmetauscher 6 zugeleitete Wasser weist eine Temperatur von etwa 15 °C auf und wird während des Durchgangs durch den Lamellenwärmetauscher 6 auf etwa 80 °C erwärmt. Insgesamt werden dem Lamellenwärmetauscher von Tankwagen 10 etwa 27 m³ Wasser mit einer Temperatur von etwa 15 °C zugeleitet. Aufgrund der vorgenannten Leistung des Lamellenwärmetauschers 6 wird für die Erwärmung dieses Wassers auf eine Temperatur von etwa 80 °C ein Zeitraum von nur etwa 8 h benötigt. Das entsprechend erwärmte Wasser wird anschließend über die Wasserausleitungsmittel 8 aus dem Wärmetauscher 6 ausgeleitet und in den Tanklaster 10 eingeleitet.

Nachdem der Tank des Tanklasters 10 mit dem auf etwa 80°C erwärmten Wasser gefüllt ist, kann der Tanklaster 10 dieses Wasser an den Ort seiner Bestimmung transportieren.

Anschließend kann Wasser eines weiteren Tanklasters wie vorstehend durch die Vorrichtung 1 erwärmt werden.

Um die Mühlenabluft für das Zeitintervall zwischen solchen Erwärmungen von Wasser nicht durch den Lamellenwärmetauscher 6 leiten zu müssen, ist das Stellmittel 5 vorgesehen, welches die gefilterte Mühlenabluft unmittelbar dem Abluftleitungsmittel 11 zuleiten kann.

## Patentansprüche

1. Verfahren zur Rückgewinnung der beim Mahlen in einer Kugelmühle entstehenden Mahlwärme, umfassend die folgenden Schritte:
1.1 Ausleiten der beim Mahlen in einer Kugelmühle entstehenden Mühlenabluft aus der Kugelmühle;
1.2 Zuleiten der aus der Kugelmühle ausgeleiteten Mühlenabluft in einen Wärmetauscher;
1.3 Durchleiten der dem Wärmetauscher zugeleiteten Mühlenabluft durch den Wärmetauscher;
1.4 Ausleiten der Mühlenabluft aus dem Wärmetauscher;
1.5 Zuleiten von Wasser in den Wärmetauscher;
1.6 Durchleiten von Wasser durch den Wärmetauscher derart, dass Wärme von der durch den Wärmetauscher geleiteten Mühlenabluft auf das Wasser übertragen wird;
1.7 Ausleiten des durch den Wärmetauscher geleiteten Wassers aus dem Wärmetauscher.

2. Verfahren nach Anspruch 1 mit einer Kugelmühle in Form einer zum Mahlen von Zementklinker verwendeten Kugelmühle.

3. Verfahren nach wenigstens einem der vorhergehenden Ansprüche, bei dem die Mühlenabluft dem Wärmetauscher mit einer Temperatur im Bereich von 80 bis 140 °C zugeleitet wird.

4. Verfahren nach wenigstens einem der vorhergehenden Ansprüche, bei dem die Mühlenabluft während des Durchleitens durch den Wärmetauscher auf eine Temperatur nicht unter 40 °C abgekühlt wird.

5. Verfahren nach wenigstens einem der vorhergehenden Ansprüche, bei dem die Mühlenabluft mit einer Temperatur nicht unter 60 °C aus dem Wärmetauscher ausgeleitet wird.

6. Verfahren nach wenigstens einem der vorhergehenden Ansprüche, bei dem die aus der Kugelmühle ausgeleitete Mühlenabluft gereinigt wird.

7. Verfahren nach wenigstens einem der vorhergehenden Ansprüche mit einem Wärmetauscher in Form eines Lamellenwärmetauschers.

8. Verfahren nach wenigstens einem der vorhergehenden Ansprüche, bei dem das Wasser dem Wärmetauscher mit einer Temperatur im Bereich von > 0 bis 30 °C zugeleitet wird.

9. Verfahren nach wenigstens einem der vorhergehenden Ansprüche, bei dem das Wasser während des Durchleitens durch den Wärmetauscher durch die von der Mühlenabluft auf das Wasser übertragenen Wärme auf eine Temperatur im Bereich von 50 bis <100 °C aufgeheizt wird.

10. Vorrichtung zur Rückgewinnung der beim Mahlen in einer Kugelmühle entstehenden Mahlwärme, umfassend die folgenden Merkmale:
10.1 Abluftzuleitungsmittel (3a, 3b, 3c), durch die aus der Kugelmühle (2) ausgeleitete Mühlenabluft einem Wärmetauscher (6) zuleitbar ist;
10.2 einen Wärmetauscher (6), durch den die über die Abluftzuleitungsmittel (3a, 3b, 3c) zuleitbare Mühlenabluft leitbar ist;
10.3 Abluftausleitungsmittel (12), durch die die Mühlenabluft aus dem Wärmetauscher (6) ausleitbar ist;
10.4 Wasserzuleitungsmittel (7), durch die Wasser dem Wärmetauscher (6) zuleitbar ist;
10.5 der Wärmetauscher (6) ist derart ausgebildet, dass über die Wasserzuleitungsmittel (7) dem Wärmetauscher (6) zugeleitetes Wasser derart durch den Wärmetauscher (6) leitbar ist, dass Wärme von der durch den Wärmetauscher(6) geleiteten Mühlenabluft auf das Wasser übertragbar ist;
10.6 Wasserausleitungsmittel (8), durch die durch den Wärmetauscher (6) geleitetes Wassers aus dem Wärmetauscher (6) ausleitbar ist.
